# EUROPEAN PATENT APPLICATION

(11) **EP 2 813 918 A1**
(43) Date of publication of application: **17.12.2014**
(21) Application number: 13171541.9
(22) Date of filing: 11.06.2013
(51) Int. Cl.: G06F 1/32, G06F 3/0354

(54) **Electronic pen**

(71) Applicant: Anoto AB, 227 22 Lund (SE)
(72) Inventor: Sjögren, Anders, 226 47 Lund (SE)
(74) Representative: Grönlund, Tim Linus Wilhelm

(57) **Abstract**

An electronic pen (100) comprises a position sensing mechanism (120) for acquiring position data indicative of a position of a pen tip (110) of the electronic pen (100) in relation to a surface (102); a capacitive touch sensor (180), which is arranged to detect when the electronic pen (100) is grabbed by a user; and a processor (162), which is arranged to receive a signal from the capacitive touch sensor (180) indicative of a user grabbing the electronic pen (100) and, in response to receipt of the signal, to bring the position sensing mechanism (120) to a pre-active mode, wherein the position sensing mechanism (120) is ready to start acquiring position data.

## Description

### Field of the Invention

The invention relates to an electronic pen and, specifically to power management of the electronic pen.

### Background Art

Electronic pens can be used for generation of information that electronically represents handwritten entries on a product surface. One type of an electronic pen comprises a small built-in camera, a built-in processor and a memory. The electronic pen is arranged to detect a dot pattern arranged on a surface that the pen is applied to.

When applying the pen to a surface, the camera continuously captures images of the dot pattern on the surface. Concurrently, the built-in processor determines, from the dot pattern in the images, the momentary position of a pen tip of the pen.

The activation of the electronic pen should be controlled such that the electronic pen is active and captures images when the pen tip is applied to a surface. Further, the power consumption of the electronic pen should be controlled such that the battery of the electronic pen is not drained too quickly.

In this regard, several solutions have been proposed. In WO 02/093467, an electronic pen is disclosed, wherein an actuation device comprises a sensor unit for sensing presence or absence of a cap on a pen body. Hence, by removing the cap from the pen body, a user can activate the electronic pen and ensure that the electronic pen is ready to capture images when the pen tip is applied to a surface. However, if the user forgets to put the cap back on the pen body after use, the battery of the electronic pen may be quickly drained. Also, if the cap is lost, activation and deactivation of the electronic pen cannot be performed as desired.

Another alternative would be to provide the electronic pen with an on/off button, as briefly discussed in WO 03/069547. Hence, the electronic pen can be switched on and off by means of the on/off button. This ensures that the activation and deactivation of the electronic pen is not dependent on a part of the electronic pen that may be lost. However, if the user forgets to push the on/off button before starting to write with the electronic pen, no strokes drawn with the pen will be electronically recorded. Further, if the user forgets to push the button when the electronic pen is no longer to be used, the battery of the electronic pen may be quickly drained.

### Summary of the Invention

It is an object of the invention to provide activation of an electronic pen in a way that ensures that the pen is active when used for writing and that the battery life is adequately controlled by suitable power management.

These and other objects of the invention are at least partly accomplished by means of an electronic pen according to claims 1, 6, 10 and 17.

According to a first aspect of the invention, it relates to an electronic pen, which comprises: a position sensing mechanism for acquiring position data indicative of a position of a pen tip of the electronic pen in relation to a surface, a capacitive touch sensor, which is arranged to detect when the electronic pen is grabbed by a user, and a processor, which is arranged to receive a signal from the capacitive touch sensor indicative of a user grabbing the electronic pen and, in response to receipt of the signal, to bring the position sensing mechanism to a pre-active mode ready to start acquiring position data.

Thanks to the pen comprising a capacitive touch sensor, the pen may detect when it is being grabbed by a user. Further, by using the signal from the capacitive touch sensor to bring the position sensing mechanism to a pre-active mode, the position sensing mechanism may be prepared for acquiring position data when a user grabs the electronic pen and it is likely that the pen is about to be used and position data is to be captured. This implies that a user may not need to remember to take any further action in order to activate the pen, when the user wants to start acquiring an electronic representation of writing with the pen. On the contrary, the pen is started by means of the user grabbing the electronic pen providing an intuitive way of using the pen. Further, when the pen is no longer grabbed by a user, it is unlikely that capturing of information is imminent. Therefore, the signal from the capacitive touch sensor may also be used to put the electronic pen into a low power mode in order to save power of the pen.

As used herein, the pre-active mode denotes a mode wherein the position sensing mechanism is not active in acquiring position data, but preparations have been made for allowing the position sensing mechanism to quickly start acquiring position data. Hence, the position sensing mechanism is not consuming as much power in the pre-active mode as in an active mode where the position sensing mechanism acquires position data. On the other hand, the position sensing mechanism consumes more power in the pre-active mode than in a sleep mode or completely shut-off mode. The preparations for allowing the position sensing mechanism to start acquiring position data may relate to providing power to a detector that acquires information that may be converted to position data. The preparations may also include setting parameters that may be used for controlling a process of acquiring position data.

According to a second aspect of the invention, it relates to an electronic pen, which comprises a position sensing mechanism for acquiring position data indicative of a position of a pen tip of the electronic pen in relation to a surface, a capacitive touch sensor, which is arranged to detect when the electronic pen is grabbed by a user, a pen down detector, which is arranged to detect when a pen tip of the electronic pen is applied to a surface, and a power management unit for controlling a power state of the electronic pen to switch between at least a low power mode and a normal run mode, wherein said power management unit in said low power mode is configured to respond to interrupt signals from the capacitive touch sensor and the pen down detector for entering the normal run mode.

Thanks to the power management unit using input from a capacitive touch sensor, the electronic pen may be switched to a normal run mode when a user grabs the electronic pen and the pen may be about to be used. As described above, this may ensure that the electronic pen is ready to capture information when the pen is applied to a surface, while power may be saved when the pen is not grabbed by a user. Further, by using input from the pen down detector as well, the electronic pen may be entered into the normal run mode even if, for some reason, the capacitive touch sensor does not detect the pen being grabbed.

According to a third aspect of the invention, it relates to an electronic pen, which comprises a position sensing mechanism for acquiring position data indicative of a position of a pen tip of the electronic pen in relation to a surface, a casing, inside which said position sensing mechanism is arranged, and a capacitive touch sensor, the capacitive touch sensor comprising a substrate on which electrodes are formed, the substrate being mounted in the electronic pen such that the substrate is arranged in a close relationship to the inside of the casing, the capacitive touch sensor forming a touch area on the outside of the casing that is sensitive to being touched by a human finger.

Thanks to the electronic pen being provided with a capacitive touch sensor, the electronic pen may detect when the pen is being grabbed by a user. By means of the capacitive touch sensor being arranged in a close relationship to the casing, the electronic pen may be highly sensitive to being touched by a user.

According to a fourth aspect of the invention, it relates to an electronic pen, comprising a position sensing mechanism for acquiring position data indicative of a position of a pen tip of the electronic pen in relation to a surface, a display for communication of information to a pen user, a capacitive touch sensor, which is arranged to detect when the electronic pen is grabbed by a user, and a processor, which is arranged to receive a signal from the capacitive touch sensor indicative of a user grabbing the electronic pen and, in response to said signal, trigger a control circuitry to activate the display.

Thanks to the pen comprising a capacitive touch sensor, the pen may detect when it is being grabbed by a user. This may trigger the electronic pen to wake up. By means of the processor activating a display in response to the signal from the capacitive touch sensor, the user may receive immediate feedback that the pen is ready to be used. While the user may not need to remember to take any specific action to activate the electronic pen, thanks to the pen comprising a capacitive touch sensor sensing the pen being grabbed, the user may further receive positive confirmation that the pen is awake and ready to be used by means of feedback through the display. This adds to the electronic pen working in an intuitive manner.

### Brief Description of the Drawings

The embodiments of the invention will now be described in more detail with reference to the accompanying drawings.
Fig. 1 is a schematic view of a system using an electronic pen.
Fig. 2 is a schematic view of a cross-section of an electronic pen.
Fig. 3 is an exploded view showing an optical system of a position sensing mechanism of the electronic pen.
Fig. 4 is a schematic view illustrating the capacitive coupling between a capacitive object and electrodes of a capacitive touch sensor.
Fig. 5 is a schematic view of the capacitive touch sensor for the electronic pen.
Fig. 6 is a schematic view of a touch sensor circuit.
Fig. 7 is a schematic view of the capacitive touch sensor folded to a cylindrical shape.
Fig. 8 is a schematic view of a cross-section of overlapping edges of the capacitive touch sensor, when the capacitive touch sensor is folded to a cylindrical shape.
Fig. 9 is a schematic view of a power management set-up of the electronic pen.
Fig. 10 is a flow chart illustrating a method of switching power states of the electronic pen.

### Detailed Description of a Preferred Embodiment

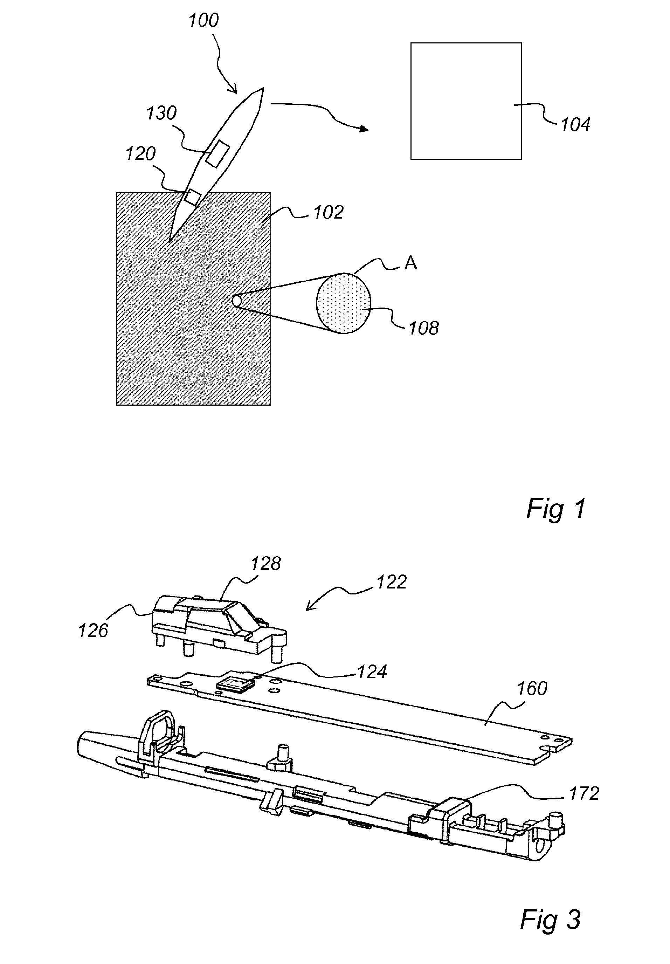

Referring to Fig. 1, a general description of a system using an electronic pen 100 will first be described. The electronic pen 100 is used for writing on or pointing at a surface 102. During use of the electronic pen 100, an electronic representation is recorded of positions pointed at or positions forming the writing of the pen. The electronic representation of the positions may be processed in the electronic pen 100 or may be transferred from the electronic pen 100 to an external unit 104 for further processing.

The surface 102 may be any kind of surface on which writing may be performed, such as a sheet of paper, a whiteboard surface, a plastic film, or a display surface. The electronic pen 100 may be provided with a writing implement 106 being arranged to leave a trace on the surface 102 during writing. Thus, both a physical and an electronic copy of the writing may be created. Alternatively, the electronic pen 100 may be provided with a stylus, leaving no trace on the surface 102. This may be particularly suitable if the electronic pen 100 is used for writing on a display surface or interacting with a display user interface of an electronic device.

The electronic pen 100 may comprise a position sensing mechanism 120 for acquiring position data, which may be transformed to an electronic representation of a position of the electronic pen 100.

As used herein, position data should be construed as any data acquired by a sensor, which data holds information about a position of a writing tip 110 of the electronic pen 100. Such position data may e.g. be an image of a position-coding pattern or a processed image, wherein the data-holding parameters of the image have been extracted. As a further alternative, position data may be information from a sensor, such as an accelerometer, possibly in combination with a gyroscope, providing information of a relative movement of the electronic pen 100.

The surface 102 may be provided with a position-coding pattern 108, which is illustrated as a hatching of the surface 102 in Fig. 1 and also schematically shown in the magnified area A in Fig. 1. The electronic pen 100 may then be able to determine its position by means of the position sensing mechanism 120 detecting the position-coding pattern 108 in the vicinity of the writing tip 110 of the electronic pen 100.

The electronic pen 100 may comprise an image sensor for detecting the position-coding pattern 108. The pattern may be optically readable and the image sensor is thus optical. The electronic pen 100 may further comprise an optical module for forming an image of the position-coding pattern 108 on the image sensor. The position of the electronic pen 100 may then be determined by decoding the imaged portion of the position-coding pattern 108. The decoding may be performed by an analyzing unit 130 receiving position data from the position sensing mechanism 120. Examples of position-coding patterns are provided in US 5,221,833; US 5,477,012; US 5,652,412; WO 00/73983; WO 01/26032; WO 01/71643; US 6,330,976; and US 7,263,224.

The position sensing mechanism 120 may be arranged to detect position data of a sequence of positions as the electronic pen 100 is used. Thus, writing or drawing with the electronic pen 100 on the surface 102 will result in a sequence of positions being obtained. This sequence of positions may form an electronic representation of the writing. However, a position may be associated with a certain function. Thus, the position sensing mechanism 120 may alternatively detect position data holding information that a position is within an area associated with a certain function. In this case, the analyzing unit 130 may transform the acquired position data into an area identification indicating in what area of the surface 102 the pen tip 110 has been applied. As a further alternative, the position data acquired by the position sensing mechanism 120 may provide a combination of sequences of positions and area identifications. Also, the determination whether a position is associated with a certain function may be performed at a later stage of processing the positions. Thus, the analyzing unit 130 may only provide a sequence of determined positions and an area identification may be determined by another unit which receives the sequence of positions from the analyzing unit 130.

The electronic pen 100 may further be arranged to communicate with an external unit 104. The electronic pen 100 may transmit the detected sequence of positions to the external unit 104 for further processing therein. However, the electronic pen 100 and the external unit 104 may alternatively or additionally communicate other kinds of information. For example, the electronic pen 100 may transmit images of the position-coding pattern 102 to the external unit 104, and the corresponding positions may be determined in the external unit 104 instead. Further, the electronic pen 100 may transmit function calls for initiating an operation in the external unit 104, which may e.g. be triggered by detection in the pen 100 of a position within an area associated with a certain function. The electronic pen 100 may also be arranged to transmit any other kind of information generated or stored in the electronic pen 100 to the external unit 104. Moreover, the external unit 104 may transmit information to the electronic pen 100, such as reactions to the detected positions, updates of software of the electronic pen 100 or specifications of associations between positions and functions.

As described above, the electronic pen 100 may be arranged to communicate with an external unit 104, which processes the information received from the electronic pen 100. However, the external unit 104 may also be arranged to forward the information to a processing unit. The external unit 104 may be any kind of unit that is able to communicate and handle data information, such as a computer, a mobile phone, a Personal Digital Assistant, etc. Where the external unit 104 is a computer, the processing of the information from the electronic pen 100 may typically be performed in the computer. However, where the external unit 104 is a mobile phone, the mobile phone may typically be arranged to forward the information to another processing unit, such as a server. The information may be forwarded via a telephone network and a computer network, such as the Internet or a local area network, for reaching the processing unit. Of course, the mobile phone may alternatively itself process the information. Likewise, when the external unit 104 is a computer, the computer may be arranged to forward the information to another processing unit.

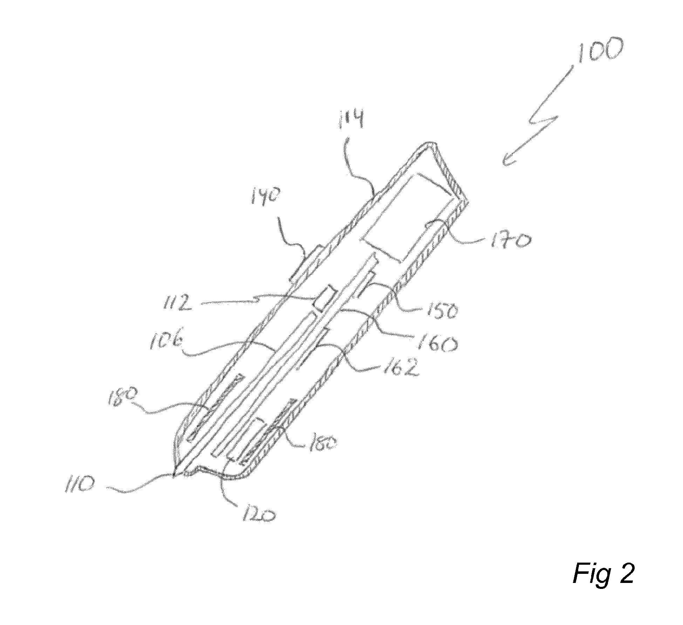

Referring now to Figs 2 and 3, a general description of an electronic pen 100 will be provided. The electronic pen 100 comprises a shell or casing 114 enclosing pen components. The electronic pen 100 may further comprise a writing implement 106 having a writing tip 110. The writing implement 106 may be movable between a retracted position completely inside the casing 114 of the electronic pen 100 and an extended position, wherein the writing tip 110 of the writing implement 106 projects from the casing 114 of the electronic pen 100. Alternatively, the writing implement 106 may be arranged in a fixed relation to the casing 114 of the electronic pen 100, and the electronic pen 100 may comprise a cap covering the writing tip 110, which may be removed for unveiling the tip 110.

The writing implement 106 may be arranged to leave a pigment trace on the surface 102 during writing. For instance, the writing implement 106 may be in the form of an ink cartridge for any kind of pen, such as a ballpoint pen, a rollerball pen, a fountain pen or a felt tip pen. The ink cartridge may be in the form of a pen refill, which may be substituted when the pen runs out of ink. Alternatively, the writing implement 106 is fixed and may be provided with additional writing material, if needed. Using this alternative, a graphite lead may be used for leaving the pigment trace. The writing implement 106 may thus realize a mechanical pencil.

According to another alternative, the writing implement 106 is arranged not to leave any trace on the surface 102. In this regard, the writing implement 106 may be realized as a stylus having a tip 110 for pointing at desired positions. Also, the electronic pen 100 may be provided with both an ink cartridge and a stylus, such that it is possible to switch between a mode where a pigment trace is made on the surface 102 and a mode where no trace is made.

The electronic pen 100 may comprise a pen down detector 112 for determining whether the tip 110 of the electronic pen 100 has been applied onto the surface 102. Thus, the pen down detector 112 detects when a user puts down the electronic pen 100 on the surface 102 for commencing input of data with the electronic pen 102. The pen down detector 112 may be a force sensor. The force sensor may be arranged at the opposite end of the writing implement 106 to the tip 110. The writing implement 106 may be movable such that a force is applied to the force sensor when the tip 110 is applied to the surface 102. Alternatively, detection that the pen 100 is applied to the surface 102 may be accomplished by the image sensor being able to acquire an image of the surface 102 in focus.

The electronic pen 100 may further comprise a position sensing mechanism 120 for recording information in order to determine the position of the tip 110 of the electronic pen 100 on the surface 102. The position sensing mechanism 120 may start acquiring position data in response to a signal from the pen down detector 112 that the electronic pen 100 has been applied to the surface 102.

The position sensing mechanism 120 may be arranged to acquire an image of the surface 102 depicting a portion of a position-coding pattern 108 on the surface 102. The position-coding pattern 108 may have characteristics that enable the pattern to be distinguished from the surface 102 on which it is applied. Thus, the electronic pen 100 comprises a corresponding sensor that is able to image the surface 102 to separate the pattern 108 from the surface 102.

In a preferred embodiment, the position-coding pattern 108 is optically detectable. The position sensing mechanism 120 may then comprise an optical system 122 for forming an image of the surface 102 close to the writing tip 110 onto an optical image sensor 124, such as a charge coupled device (CCD) or complementary metal-oxide-semiconductor (CMOS) sensor, which is arranged to acquire a two-dimensional image. The optical system 122 may comprise one or several lenses 126 for focussing the image onto the sensor surface. The optical system 122 may also comprise an imaging light guide 128, which may include one or more mirrors for guiding the light to the sensor 124. Also, the optical system 122 may comprise a wavelength filter for filtering out unwanted wavelengths. The position-coding pattern 108 may have especially strong reflective or absorptive characteristics for certain wavelengths. By only letting these wavelengths reach the sensor surface, the image quality may be improved.

The electronic pen 100 may further comprise a light source (not shown). The light source may emit light towards the portion of the surface 102 that is being imaged. The light source may also be provided with guiding optics for directing the emitted light towards the desired portion of the surface 102. Thus, the imaging conditions may be improved. The light source may further be arranged to emit light in a wavelength range, which the position-coding pattern 108 will interact with in a strong manner. For example, the light source may emit infrared light and the position-coding pattern 108 may be printed on the surface 102 with a pigment that strongly absorbs infrared light. The optical system 122 may further have a filter that blocks wavelengths shorter than infrared light to further improve the quality of the image acquired by the sensor 124.

The position-coding pattern 108 can, however, be based on a parameter other than an optical parameter. Correspondingly, the position sensing mechanism 120 in the electronic pen 100 may comprise a sensor, which is arranged to read another parameter than an optical parameter. For example, the position sensing mechanism 120 may comprise a spectrometer for detecting a pattern using a chemical parameter, e.g. the chemical composition of the surface 102 being varied in order to produce the position-coding pattern 108. As another alternative, the position sensing mechanism 120 may comprise a detection head in which a driving coil and a receiving coil are disposed. These coils interact with a scale in which a magnetic modulating section such as closed loop coils is disposed, e.g. in the form of a metal pattern on a resin substrate. The detection head is relatively moved with respect to the magnetic modulating section to modulate a magnetic flux generated by the driving coil. A primary varying magnetic flux which is generated when the driving coil is AC-driven is modulated by the scale, so that a magnetic pattern of a predetermined period is formed. The magnetic pattern is coupled with the receiving coil of the detection head. As a result, an induced voltage which is varied in accordance with movement of the scale appears in the receiving coil.

As a yet further alternative, the position sensing mechanism 120 may comprise accelerometers and/or gyroscopes possibly in combination with a magnetometer in order to detect the movements of the electronic pen 100 relative a starting position. The position sensing mechanism 120 may then further comprise a detector for determining the starting position, such as a barcode reader for reading a barcode in a predetermined position of the surface 102.

As another further alternative, the position-coding pattern 108 may be based on acoustic, electromagnetic, capacitive or inductive marks. However, it is preferable for the pattern to be optically readable, as it is then relatively simple to apply it onto different products and in particular onto paper.

The electronic pen 100 may further comprise an analyzing unit 130, which is arranged to determine the position of the electronic pen 100 based on the data acquired by the position sensing mechanism 120. The analyzing unit 130 may be integrated with the position sensing mechanism 120 in order to directly determine the position of the electronic pen 100 upon the position data being acquired. For example, the analyzing unit 130 may be realized as a customer-specific integrated circuit adapted for the purpose (for example ASIC, application-specific integrated circuit), which may also hold the image sensor 124. As an alternative, the analyzing unit 130 may be arranged to receive the acquired position data, such as images, from the position sensing mechanism 120. The analyzing unit 130 may then still be realized as a customer-specific integrated circuit, or of some form of programmable integrated circuit (for example PROM, FPGA) or an ordinary processor running a special software program for determining the position based on the acquired position data. Also, the electronic pen 100 may be arranged to merely acquire the position data and transmit the position data to an external unit 104 for analysis. In such case, the analyzing unit would be arranged in an external unit 104.

The analyzing unit 130 may be arranged to analyze an image of a position-coding pattern 108 and decode the position coded by the portion of the position-coding pattern 108 that is depicted in the image. The analyzing unit 130 would naturally have instructions that are dependent on the encoding scheme of the position-coding pattern 108 such that the decoding performed in the analyzing unit 130 is adapted to the specific position-coding pattern 108 to be decoded. Examples of such decoding algorithms are provided in WO 01/26032 and WO 03/001440.

The electronic pen 100 may further comprise means for providing feedback to a user. Feedback may be provided in many different ways. For example, the electronic pen 100 may comprise a vibrator, which may cause the electronic pen 100 to vibrate in order to e.g. signal to the user that a certain position associated with a function has been successfully detected or that the electronic pen 100 is not able to decode or read positions properly. As an alternative, the electronic pen 100 may comprise one or more light sources, such as LEDs, for providing information to the user. The LEDs may e.g. indicate when the electronic pen is switched on or when data is being transmitted to an external unit. As a further alternative, the electronic pen 100 may comprise a display 140. Thus, text or picture messages may be provided to the user regarding the handling of the electronic pen 100. As a yet further alternative, the electronic pen 100 may comprise a speaker (not shown) for providing audio messages to the user. Of course, the electronic pen 100 may comprise one or more of these feedback means in order to provide feedback in more than one way to the user. The electronic pen 100 may then be arranged to provide different forms of feedback through different means.

The power supply for the electronic pen 100 may be obtained from a battery 170, which may be mounted inside the electronic pen. The battery 170 may be rechargeable so as to allow the battery 170 to be charged when the pen is connected to an external power source. As an alternative, the power supply may be provided via a cable from an external power source.

The electronic pen 100 may further comprise a main printed circuit board 160. The main printed circuit board 160 may comprise a processor 162 which may be arranged to control the different parts of the electronic pen 100, such as the pen down detector 112, the position sensing mechanism 120, such as the image sensor 124 and light source as exemplified above, the feedback means, and a communication unit 150 for communicating with an external unit 104. According to one embodiment, the processor 162 may also be arranged to analyze the position data acquired by the position sensing mechanism 120 so that the processor 162 forms the above-described analyzing unit 130. The processor 162 may also be connected to a storage memory for storing, for example, position data or an electronic representation of recorded positions of the writing tip 110 of the electronic pen 100. The different parts of the electronic pen 100 may be connected and/or mounted on the main printed circuit board 160. However, the electronic pen 100 may alternatively comprise one or more additional printed circuit boards in addition to the main printed circuit board 160. The processor 162 for controlling the operation of the electronic pen 100 is mounted on the main printed circuit board 160, whereas the one or more additional printed circuit boards may accommodate different components of the electronic pen 100 and may be specifically adapted to specific functionalities. For example, the communication unit 150 may be arranged on a specifically adapted additional printed circuit board.

The main printed circuit board 160 may be arranged to extend in a longitudinal direction of the electronic pen 100, which enables the electronic pen 100 to be manufactured with a small diameter. The electronic pen 100 may also comprise a carrier 172, which may form a mounting unit for controlling the mounting of the parts of the electronic pen 100 inside the casing 114 of the pen. An example of such a carrier 172 is provided in WO 05/0574471.

The electronic pen 100 further comprises a communication unit 150 for communicating with an external unit 104. The electronic pen 100 may be arranged to communicate with the external unit 104 through a wired connection or through a wireless connection or both. The wired connection may e.g. be established by the electronic pen 100 comprising a connector for receiving a plug or for being introduced into a receptacle. The connector may be connected to the processor 162 via the printed circuit board 160 for allowing the processor 162 to communicate information to and from the external unit 104 via the connector.

The connector may be any kind of electrical connector, such as a USB connector. The wired connection may alternatively be established by the electronic pen 100 being placed in a specially designed cradle, which in turn may comprise a wire for connecting to the external unit 104. The electronic pen 100 may then comprise an interface for forming a connection with the cradle. The interface may be freely designed, since the cradle is specially designed for the electronic pen 100, and thus many alternative techniques may be feasible. For example, any kind of plug/socket connection may be used.

A wired connection may also be used for charging the rechargeable battery 170 of the electronic pen 100. Thus, when the electronic pen is connected to an external unit 104 via a wired connection, power may be extracted from the external unit 104 for charging the battery 170 of the electronic pen 100. Alternatively, the battery 170 may be recharged through wireless means, such as via inductive charging.

The wireless connection may be a connection based on radio frequency communication. In this regard, the communication unit 150 may comprise a communication circuit, which may be mounted on the main printed circuit board 160 or on a separate additional printed circuit board connected to the main printed circuit board 160. The communication circuit may comprise an embedded antenna for transmitting and receiving radio signals. Also, the communication circuit may comprise a modulator for converting an electronic signal carrying information to a radio signal. Further, the communication unit 150 may comprise a demodulator for converting a received radio signal to an electrical signal that may be interpreted as received information. The communication unit 150 may be arranged to communicate over a Wi-Fi or Bluetooth connection.

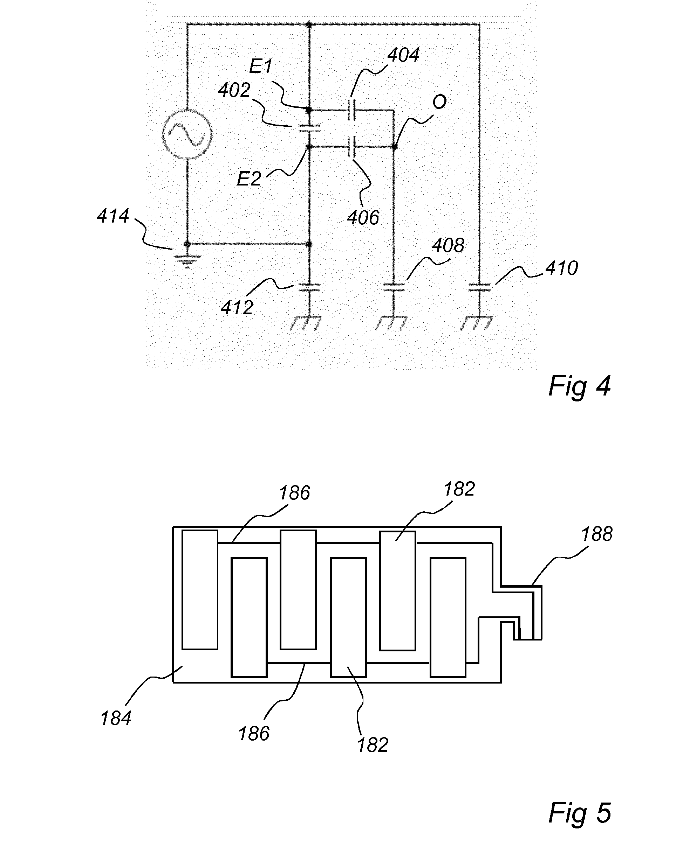

The electronic pen 100 may also comprise a capacitive touch sensor 180, which will now be described in further detail with reference to Figs 4-7. The capacitive touch sensor 180 may provide detection of a user touching or holding the electronic pen 100 by means of the capacitive touch sensor 180 sensing a change in capacitance due to the user's finger being in contact with the electronic pen 100.

The capacitive touch sensor 180 may be arranged at a front portion of the electronic pen 100. The capacitive touch sensor 180 may be arranged as close as possible to a shell 114 of the electronic pen 100 such that a user grabbing the electronic pen 100 will apply his finger(s) in close relationship to the capacitive touch sensor 180.

The capacitive touch sensor 180 may be mounted extending across the entire circumference of the electronic pen 100 such that the capacitive touch sensor 180 may be sensitive to a user grabbing the electronic pen 100 anywhere around the circumference of the electronic pen 100. Also, the grip of a user typically extends across a large portion of the circumference of the pen. Hence, when the capacitive touch sensor 180 extends across the entire circumference of the electronic pen 100, the finger(s) of the user will be in close contact to the capacitive touch sensor 180 over a substantial area across the circumference of the pen. This implies that a strong signal indicative of the user grabbing the electronic pen 100 may be received from the capacitive touch sensor 180.

Alternatively, the capacitive touch sensor 180 may be mounted at a specific portion of the electronic pen 100 and the user may advantageously be guided to touch the specific portion, e.g. by an indentation being formed in the pen shell 114 to accommodate a user's finger being applied in the indentation when the electronic pen 100 is grabbed.

In its simplest form, the capacitive touch sensor 180 comprises a single electrode. The single electrode has a capacitance to earth ground at infinity. As a conductive object, such as a finger of a user of the electronic pen 100, approaches the electrode, a capacitive coupling is formed between the electrode and the finger and the capacitance of the electrode increases. This capacitance change may be detected in order to determine that the electronic pen 100 is touched.

In Fig. 4, an electric circuit is depicted to illustrate the typical couplings that are formed in a capacitive touch sensor 180. Nodes E1 and E2 denote a first and a second electrode 182. There is a capacitive coupling between these electrodes 182 as illustrated by capacitor 402. Node O denotes an object, such as a user's finger brought in close relationship to the electrodes 182. There is a capacitive coupling between the object and the electrodes 182, as illustrated by capacitors 404 and 406, respectively. Further, the object itself has a capacitive coupling to earth ground as illustrated by capacitor 408.

The pen 100 may be grounded to earth, which enables measuring of the capacitance to earth ground of the object O that is arranged close to or in contact with the capacitive touch sensor 180. This setup is preferable when using a single electrode in the pen 100 to detect conductive objects. Alternatively, the pen 100 may provide a floating ground, which enables measuring of the capacitive coupling between the object and the electrodes, indicated by capacitors 402, 404 and 406.

As is clear from Fig. 4, if none of the electrodes 182 is connected to earth ground, there is still a capacitive coupling to earth ground for each of the electrodes as illustrated by capacitors 410 and 412. As long as the capacitive coupling illustrated by capacitors 410 and 412 are approximately equal and in addition small, relative to the mutual capacitive coupling of the electrodes 182 as indicated by capacitor 402, the capacitive touch sensor 180 will mainly measure the capacitive coupling to the object via illustrated capacitors 402, 404 and 406. If the capacitive coupling to earth ground is different for the two electrodes, this will be detected as a difference in the sensitivity of the electrodes 182. Specifically, if one of the electrodes 182 is connected to the relatively large floating ground plane 414 in the pen 100, it will cause an increase in in the coupling of the electrodes 182 to earth ground via 410 and this will make the sensitivity of the electrodes different. This implies that different results in the capacitance measurements may occur depending on whether the capacitive object is closest to the first or the second electrode 182. In addition, the floating ground planes of the electronic pen 100 can couple with the object O directly, effectively increasing the capacitance of 406, which also causes a different sensitivity of the electrodes 182.

Summing up, if one of the electrodes 182 is connected to the large floating ground planes of the electronic pen 100, the sensitivity of the two electrodes 182 might differ, and, as the coupling capacitances indicated by capacitors 408, 410 and 412 come more into play, it becomes more difficult to draw conclusions about the object in vicinity.

As shown in Fig. 5, the capacitive touch sensor 180 may comprise at least two electrodes 182, which are arranged on a substrate 184. There is a mutual capacitance between adjacent electrodes 182. When a finger of a user of the electronic pen 100 is applied close to the electrodes 182, a capacitive coupling is formed between the finger and the respective electrodes 182. This changes the mutual capacitance between the adjacent electrodes 182 and the capacitance change may be detected in order to detect that the electronic pen 100 is touched.

Each electrode 182 may be connected to a trace 186 on the substrate 184. The trace 186 may be arranged to connect the electrode 182 to a touch sensor circuit. In this regard, the substrate 184 may comprise a connector 188 that may be attached to the main printed circuit board 160. The trace 186 may then extend from the connector 188 to the electrode 182 for connecting the electrode 182 to the main printed circuit board 160.

The touch sensor circuit may be integrated in the processor 162. In such an arrangement, the trace 186 may connect the electrode 182 to a signal input on the processor 162.

Every other electrode 182 may be connected to each other via the trace 186. This implies that there are two sets of electrodes 182 that are connected to each other via two traces 186 and the electrodes 182 of the two sets are arranged in an alternating relationship on the substrate 184. According to this set-up, an average capacitance between the two sets of electrodes 182 may be measured by means of a single measurement. This enables a single measurement to detect user contact with the electronic pen 100 at any part of the pen provided with the capacitive touch sensor 180.

One of the sets of electrodes 182 may be connected by the trace 186 to floating ground on the main printed circuit board 160. Hence, the capacitive touch sensor 180 may only need to use one signal input on the processor 162. However, by connecting one of the sets of electrodes 182 to floating ground when detecting capacitive coupling to an object, there is an asymmetry in the circuit, as explained above with reference to Fig. 4, in that the two sets of electrodes 182 are not identically arranged in the touch sensor circuit. This implies that the capacitance change caused by a user's finger may depend on whether the finger is closer to an electrode 182 connected to floating ground or an electrode 182 connected to the signal input. In particular, stray capacitances between the finger and floating ground may influence the sensed capacitance and it may be somewhat more difficult to detect the presence of a user's finger.

According to an alternative, each electrode 182 may be separately connected to the touch sensor circuit, e.g. by being connected to an individual signal input on the processor 162. Thus, the capacitance between each pair of adjacent electrodes 182 may be individually measured, This may allow sensing not only the fact that a user is grabbing or touching the electronic pen 100 but also sensing which part of the electronic pen 100 the user is touching.

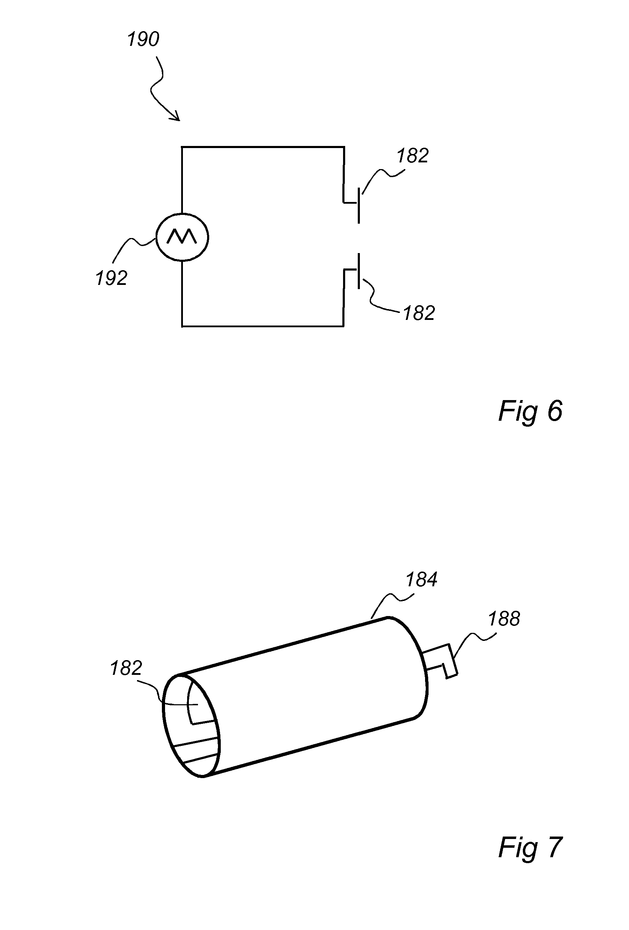

Fig. 6 shows an example of a touch sensor circuit 190 for detecting user contact with the electronic pen 100. The touch sensor circuit 190 comprises two electrodes 182. The electrodes are connected to a relaxation oscillator 192, which may be embedded in the processor 162. The capacitance to be sensed forms a portion of a resistor-capacitor circuit, an inductor-capacitor circuit, or an inductor-capacitor-resistor circuit of the oscillator 192. The unknown capacitance may be charged with a known current. The capacitance can then be calculated by measuring the charging time required to reach a threshold voltage of the relaxation oscillator 192, or equivalently, by measuring the oscillator's frequency. Both the charging time and the frequency are proportional to a time constant of the oscillator circuit, which in turn depends on the capacitance to be sensed. The measured frequency of the touch sensor circuit 190 may be compared to a reference frequency measured for a known reference capacitance in order to determine the unknown capacitance of the touch sensor circuit 190. The reference capacitance may be arranged inside the processor 162 for allowing the processor 162 internally to determine the reference frequency.

As an alternative, the touch sensor circuit 190 may be arranged to measure the unknown capacitance by measuring a discharging time or measuring a resonance frequency of the circuit comprising the electrodes 182.

The substrate 184 may be flexible such that it may be folded into a cylindrical shape, as shown in Fig. 7. The substrate 184 may thus be arranged such that the substrate cylinder extends along a longitudinal direction of the electronic pen 100. The substrate 184 may be arranged to surround inner components of the electronic pen 100, the inner components being arranged inside the cylindrical shape of the substrate 184. This implies that the substrate 184 may be arranged in a close relationship to a shell 114 of the electronic pen 100, allowing a user's finger(s) to be placed in a close relationship to the electrodes 182 of the capacitive touch sensor 180. In one embodiment, the substrate 184 may be attached to the carrier 172 of the electronic pen 100, the substrate 184 being folded around the carrier 172 and the components attached to the carrier 172. In another embodiment, the substrate 184 may be attached to an inner part of the shell 114. The connector 188 of the substrate 184 may extend from the cylindrical shape of the substrate 184 to be attached to the main printed circuit board 160 for connecting the electrodes 182 to the touch sensor circuit via the traces 186.

The position sensing mechanism 120 of the electronic pen 100 may be arranged in a front part of the electronic pen 100 close to the writing tip 110. This may facilitate correct determination of the position of the electronic pen 100. The capacitive touch sensor 180 may be arranged around the position sensing mechanism 120 providing touch sensitivity of the electronic pen 100 in an area of the pen, where the pen is typically held by a user. For instance, when the position sensing mechanism 120 comprises an optical system 122 and a light source, the cylindrically shaped capacitive touch sensor 180 may be arranged around the optical system 122 and the light source.

The capacitive touch sensor 180 may extend along the entire length of the electronic pen 100 providing touch sensitivity of the electronic pen 100 along the entire surface of the pen. However, the capacitive touch sensor 180 may alternatively be limited to only a front portion of the electronic pen 100. For instance, if the electronic pen 100 comprises a display 140, the display 140 may need to be connected to the printed circuit board 160. Hence, it may be difficult to arrange the capacitive touch sensor 180 to extend between the display 140 and the printed circuit board 160. Further, arranging the capacitive touch sensor 180 on top of the display 140 may put special requirements on the capacitive touch sensor 180 to make it transparent so as not to block the visibility of the display 140. Also, the electronic pen 100 may comprise a battery 170, which may be mounted in a back portion of the electronic pen 100. As the battery 170 forms a conductive object, it adds stray capacitances to the touch sensor circuit 190 which may affect the detection of the presence of a user's finger. Further, an antenna of the communication unit 150, if arranged inside a cylindrical substrate 184, may affect the capacitive touch sensor 180 so as to interfere with the detection of a user touching the electronic pen 100. Also, the capacitive touch sensor 180 may absorb energy emitted from the antenna, thereby affecting the function of the antenna. Hence, the capacitive touch sensor 180 may be arranged at a front portion of the electronic pen 100 being limited in a direction backwards from the writing tip 110 of the pen by the mounting position of a display 140, the battery 170 of the electronic pen 100 or an antenna of the communication unit 150.

The substrate 184 may be formed from a flexible insulating thin material, such as a flexible polymer film, e.g. polyester (PET), polyimide (PI), polyethylene napthalate (PEN), Polyetherimide (PEI), various fluropolymers (FEP), in order to electrically separate the signal electrodes 182 from each other as the electrodes 182 are arranged on the substrate 184.

The electrodes 182 may be formed as pieces of conducting material, which are arranged on the substrate 184. For instance, the electrodes 182 may be formed from a metal, such as copper. A copper electrode may further be covered by an oxidation protection layer of gold. The electrodes 182 may be covered by an insulating layer of e.g. plastics in order to prevent electrostatic discharges to enter the electronic pen 100 through the capacitive touch sensor 180.

The electrodes 182 may form elongate, rectangular shapes on the substrate 184 such that the electrodes 182 may cover a large portion of the substrate 184, while allowing several electrodes 182 to be arranged on the substrate 184 to provide sensitivity of the capacitive touch sensor 180 over the entire surface of the substrate 184.

One short side of the electrode 182 may be arranged a small distance from the edge of the substrate 184. This allows a trace 186 to be arranged along the edge of the substrate to extend from the respective electrodes 182 to the connector 188 of the substrate 184. The other short side of the electrode 182 may be flush with the edge of the substrate 184. Where the electrodes 182 are connected to form two sets of electrodes 182, the electrodes 182 of a first set may have a short side arranged flush with a first edge of the substrate 184, whereas the electrodes 182 of a second set may have a short side arranged flush with a second edge of the substrate 184. This allows a first trace 186 to connect the electrodes 182 of the first set along the first edge of the substrate 184. The first trace 186 is then arranged at a distance from the first edge and at a distance from the short sides of the electrodes 182 of the second set so as not to connect the electrodes 182 of the first set to the electrodes 182 of the second set. Similarly, a second trace 186 may connect the electrodes 182 of the second set along the second edge of the substrate 184.

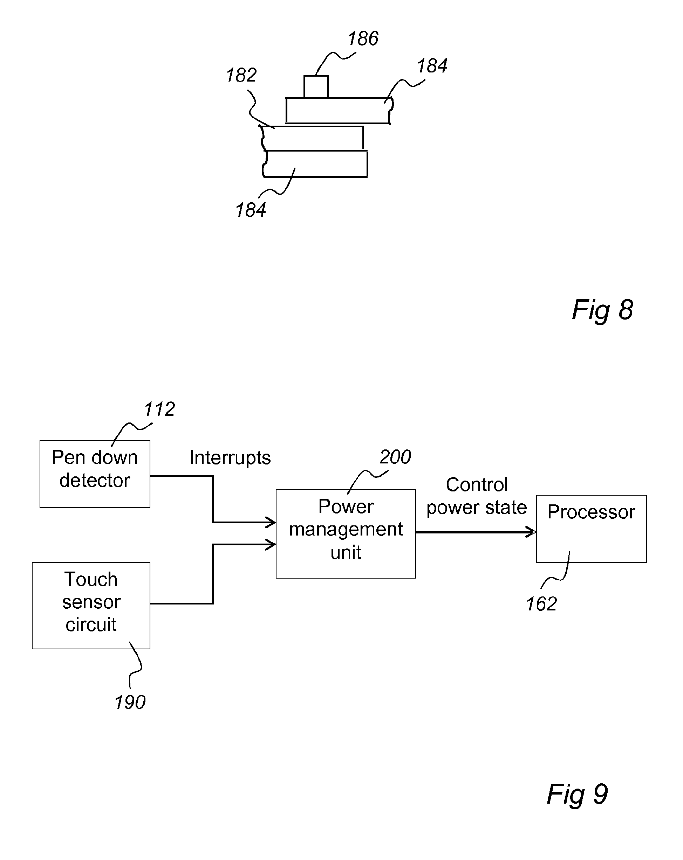

When the substrate 184 is folded into a cylindrical shape, an edge of the substrate 184 overlaps the opposite edge of the substrate 184, as shown in Fig. 8. In the overlapping portion of the substrate, the first trace 186 will be arranged on top or under the electrodes 182 of the second set, separated by the thickness of the substrate 184. This implies that there is a capacitive coupling between the first trace 186 and the overlapping electrode 182 of the second set. Similarly, there is a capacitive coupling between the second trace 186 and the overlapping electrode 182 of the first set. This capacitive coupling should be kept small in order not to interfere with the detection of a user touching the capacitive touch sensor 180. A small trace width and a large substrate thickness limit the capacitive coupling between trace 186 and electrode 182. Since the substrate thickness adds to the thickness of the electronic pen 100, the capacitive coupling between the trace 186 and the electrode 182 may preferably be limited by the trace width being kept small. Hence, the trace 186 may typically be arranged with a width of 0.1-0.2 mm. However, as a further alternative, the substrate 184 may be formed of several layers of insulating materials and the two sets of electrodes 182 may be formed in different layers such as to be insulated from each other.

Where the electrodes 182 are separately connected to the touch sensor circuit, the traces 186 may extend in parallel along one or both edges of the substrate 186 between the respective electrode 182 and the connector 188.

In one embodiment, the electrodes 182 have an elongate rectangular shape on the substrate 184 with the sides of the electrodes 182 being parallel to the edges of the substrate 184. The electrodes 182 may extend in a direction such that, when the substrate 184 is folded or wrapped into a cylindrical shape, each electrode 182 will be arranged to overlap itself so as to form a ring-like shape across the circumference of the cylindrical substrate 184. This implies that each electrode 182 is sensitive across the entire circumference of the electronic pen 100 and that a number of electrodes 182 of ring-like shape are arranged in sequence along the longitudinal direction of the cylindrical substrate 184. If the electrodes 182 are separately connected to the touch sensor circuit 190, it is possible to detect where the pen is touched along a longitudinal direction of the pen 100.

In another embodiment, the electrodes 182 extend in a direction on the substrate 184 such that the electrodes will be arranged along the longitudinal direction of the electronic pen 100, when the substrate 184 is folded or wrapped into a cylindrical shape. If the electrodes 182 are separately connected to the touch sensor circuit 190, it is possible to detect where the pen is touched along the circumference of the pen 100.

In yet another embodiment, the electrodes 182 are formed as successive elongate pieces diagonally arranged over the substrate 184. In this case, the electrodes 182 will form spirals around the cylindrical shape of the substrate 184, when the substrate 184 is folded or wrapped into a cylindrical shape. The electrodes 182 may be arranged such that a short side of an electrode 182 in the first set will overlap an opposite short side of the adjacent electrode 182 in the first set, when the substrate 184 is folded. This implies that an electrode 182 from the first set will be arranged at an opposite side of the circumference of the electronic pen 100 to an electrode 182 from the second set. This may be advantageous if one of the two sets of electrodes 182 is connected to floating ground in order to make the sensitivity for grabbing the pen the same independently of where on the capacitive touch sensor 180 the user grips, as explained above with reference to Fig. 4. In such case, a user gripping the electronic pen 100 with two fingers arranged at opposite sides of the circumference of the electronic pen 100 will apply one finger close to an electrode 182 connected to the signal input on the processor 162 and one finger close to an electrode 182 connected to floating ground. A result of such a configuration is that stray capacitances to floating ground will influence the sensed capacitance less. Thus, no matter where a user grips the pen along the longitudinal direction of the electronic pen 100, the signal from the capacitive touch sensor 180 will be more or less the same even when one electrode 182 is connected to floating ground.

Varying the width of the electrodes 182 and distances between adjacent electrodes 182 may alter the sensitivity of the capacitive touch sensor 180. Hence, by a proper design of the capacitive touch sensor 180, the presence of a user's finger may be reliably detected at any portion of the capacitive touch sensor 180. An electrode 182 may have a width that is smaller than a typical size of a user's finger. Thus, the electrode width may be approximately 5-10 mm. This implies that a user holding the electronic pen 100 at the capacitive touch sensor 180 will apply a finger at least partly between two adjacent electrodes 182, such that a capacitance change caused by the human finger may surely be detected. Further, the distance between two adjacent electrodes 182 may typically be 1-6 mm. A small distance implies that the capacitive coupling between the electrodes 182 becomes large and that the electric field between adjacent electrodes 182 does not extend far from the substrate 184. Hence, a human finger touching the pen 100 at the capacitive touch sensor 180 does not affect the capacitance between the electrodes 182 as much and the presence of the finger may be difficult to detect. A large distance between the electrodes 182 implies that the capacitive coupling between the electrodes 182 becomes small and the effect of a human finger may also be small in absolute terms, whereby the presence of a finger may be difficult to detect.

If the width of the electrodes 182 is increased in the embodiment where one set of electrodes 182 is connected to floating ground and the presence of an object is detected, the electric field between adjacent electrodes 182 extends farther from the substrate 184. This implies that the presence of a human finger provides a larger effect on the capacitance between the electrodes 182. However, the effect of the finger is more dependent on where the finger is applied relative to an electrode (i.e. between two electrodes or at the center of one electrode) such that the capacitance change is dependent on where the user touches the pen 100. This implies that if the width of the electrodes 182 is made too large, the presence of a finger may be difficult to detect at the center of an electrode 182. The electrodes 182 that are connected to floating ground may be arranged with a smaller width than the electrodes 182 of the other set, which may decrease the asymmetry of the signal due to stray capacitances between the finger and ground and pen 100.

The capacitive touch sensor 180 may be implemented in many alternative ways for providing a signal representative of a detected capacitance to the processor 162. For instance, electrodes 182 of the capacitive touch sensor 180 may be mounted in a number of different ways in the electronic pen 100.

Alternative mountings may be achieved e.g. by a substrate 184, on which the electrodes 182 are arranged, being varied in many ways. The substrate 184 could be pre-formed into a cylindrical shape, which may be guided over inner components of the electronic pen 100 for mounting of the substrate 184. In such a case, the substrate 184 may be formed of a rigid material and does not need to be folded into shape during manufacture. The substrate 184 could for example be formed from polycarbonate. The electrodes 182 may be formed from a metal material being deposited by sputtering onto a plastic substrate 184 or by laser direct structuring using a laser to apply a desired pattern of electrodes 182 onto a plastic substrate 184. Also, the electrodes 182 may be formed by forming appropriately shaped sheets of metal.

According to another alternative mounting, the substrate 184 could have a small size and only be arranged in a specific portion of the electronic pen 100. For example, the size of the substrate 184 could correspond to the size of a fingertip. In such case, the electronic pen 100 could also be provided with an indication in order to guide the user where to apply a finger in order to activate the capacitive touch sensor 180. Such an indication may be provided as an indentation in the shell 114 of the electronic pen 100. With a substrate 184 of small size, the touch sensitivity of the electronic pen 100 will be limited to a small area. In such case, it may be sufficient to provide the substrate 184 merely with a single or two electrodes 182.

In an alternative embodiment, the shell 114 of the electronic pen 100 is provided with a conductive layer, such as a conducting paint. The conductive layer may provide a capacitive coupling to a user's finger, when the electronic pen 100 is touched. The conductive layer may be arranged in rings or longitudinal stripes along the extension of the pen forming one or more electrodes of the capacitive touch sensor 180. This implies that the pen 100 is provided with areas that are sensitive to a capacitive coupling to a human, which areas may be interspaced by non-conducting areas. The conductive layer may be molded into the shell 114 of the electronic pen 100. The conductive layer may be formed from a metal sheet or a flexible plastic substrate, such as polyimide, that is provided with conducting wires. Alternatively, the conductive layer may be formed by a conducting paint, e.g. a dye provided with a conducting material. The conducting paint may be applied to the shell 114 by e.g. pad printing or laser direct structuring. During molding of the shell 114 the conductive layer is embedded into the shell 114. As an alternative, the conductive layer may be formed on the outside of the shell 114.

A wire may be arranged to extend from the conductive layer through the molded plastics of the shell 114 in order to connect the conducting layer to the inside of the pen 100. The wire may be soldered to the main printed circuit board 160 in order to connect the electrodes 182 to the main printed circuit board 160. As an alternative, the portion of conducting material, such as a conductive paint, may extend from the conductive layer to be exposed on the inside of the shell 114. Then, a pin on the main printed circuit board 160 may be mounted in contact with the portion of conducting material in order to connect the electrodes to the main printed circuit board 160. For example, the main printed circuit board 160 may comprise pogo pins that may be securely connected to a corresponding pin of the portion of conducting material. By means of using a conductive layer embedded in the shell 114, the capacitive touch sensor 180 would practically not at all affect the diameter of the electronic pen 100. It may merely add slightly to the thickness of the shell 114 in the order of 0.01 mm.

As a further alternative, the conductive layer may be molded into the shell 114 of the electronic pen 100 without being physically connected to any circuitry. Alternatively, this conductive layer may be formed on the outside of the shell 114. The electronic pen 100 could be further provided with a capacitive touch sensor 180, comprising a substrate 184 and electrodes 182 according to any of the above described embodiments. However, the conductive layer may be provided in the shell material surrounding the capacitive touch sensor 180. This implies that the capacitive coupling between a human finger touching the electronic pen 100 and an electrode 182 of the capacitive touch sensor 180 is reinforced. Therefore, the sensitivity of the capacitive touch sensor 180 could be improved by means of the conductive layer. Also, use of a conductive layer in the shell 114 of the electronic pen 100 implies that it may not be as important to arrange the electrodes 182 of the capacitive touch sensor 180 in close relationship to the outside of the pen 100. Hence, this allows the mounting requirements of the capacitive touch sensor 180 to be relaxed, providing a greater flexibility in the design of the electronic pen 100. Also, the substrate 184 and the electrodes 182 thereon may be more freely formed and adapted to requirements on the interior design of the electronic pen 100. The electrodes 182 on the substrate 184 may be arranged to correspond to the arrangement of the conductive layer such that there is a conducting area in the conductive layer applied in a portion of the shell 114 covering the electrode 182. The corresponding arrangement of the electrodes 182 and the conducting areas in the conducting layer facilitates the reinforcement of the capacitive coupling between a finger and the capacitive touch sensor 180. The electrodes 182 may be wider than the conducting areas of the conductive layer, while allowing a reinforcement of the capacitive coupling between a finger and an electrode 182.

As shown in Fig. 9, the electronic pen 100 may comprise a power management unit 200 for controlling a power state of the electronic pen 100. In order to save power, the electronic pen 100 may be set to a low power mode, wherein a number of functionalities of the electronic pen 100 may be disabled. The power management unit 200 may be implemented in the processor 162, e.g. as a process or thread in the processor 162, so as to enable controlling the power state of the processor 162 and power states of components connected to the processor 162.

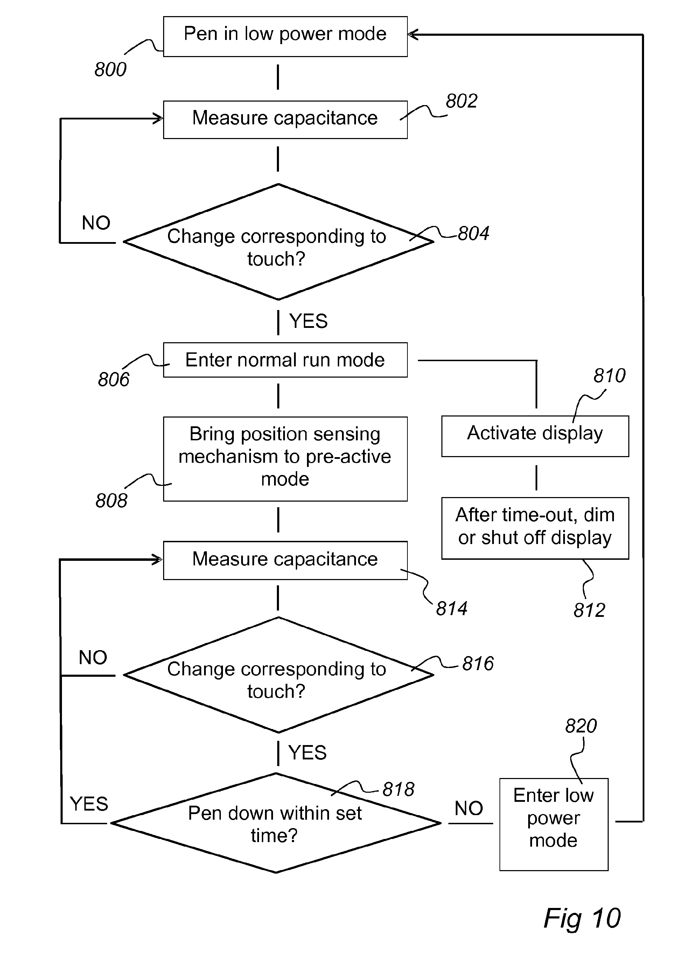

Reference is also made to Fig. 10, which shows a flow chart of capacitance measurement and how it is used for switching states in the electronic pen 100. When possible, the electronic pen 100 is in a low power mode in order to save power, step 800. The electronic pen 100 may be arranged to determine a capacitance measured by the capacitive touch sensor 180 in the low power mode, step 802. This implies that the electronic pen 100 controls whether a change in the measured capacitance has occurred, step 804. Hence, the electronic pen 100 may be set to wake up based on a detected change in the measured capacitance. The touch sensor circuit 190 may thus be active in the low power mode in order to continuously measure capacitance. In the low power mode, the relaxation oscillator 192 may be set to use a lower frequency, which saves power of the touch sensor circuit 190. The touch sensor circuit 190 may provide an interrupt signal to the power management unit 200 upon detection of a change in the measured capacitance corresponding to the capacitive touch sensor 180 being touched.

As the relaxation oscillator 192 and the determination of the capacitance may be embedded in the processor 162, the interrupt signal may be sent internally in the processor 162 to the power management unit 200. As an alternative, the capacitive touch sensor 180 may be connected to a separate processor unit (not shown), which is dedicated to determining a measured capacitance. In such case, the separate processor unit may be arranged to send a trig signal to the power management unit 200, which may or may not be embedded in the main processor 162, based on a detected change in the measured capacitance. Hence, the main processor 162 may receive a trig signal from the separate processor unit, perhaps via a separate power management unit 200, providing an indication of a user grabbing the electronic pen 100. The trig signal may trigger the processor 162 to start a wake-up procedure of the processor 162.

The processor 162 (or the separate processor unit) may be arranged to identify that a user grabs the electronic pen 100 by detecting a change in the measured capacitance. If a change is detected in the measured capacitance, the power management unit 200 may initiate a wake-up procedure of the processor 162. The processor 162 is set in a normal run mode, step 806, and may enable a process for handling position detection. In this regard, a signal may be sent to the position sensing mechanism 120 for bringing the position sensing mechanism 120 to a pre-active mode, step 808. The processor 162 may further be set in an idle state, wherein the power management unit 200 waits for a pen down signal from the pen down detector 112 indicative of the writing tip 110 being applied to a surface. As soon as a pen down signal is received, the power management unit 200 may cause the processor 162 to send a trig signal to the position sensing mechanism 120 to trigger the position sensing mechanism 120 to start acquiring position data. In one embodiment, the power management unit 200 may be arranged to increase a frequency of checking the pen down signal upon a touch grab event being detected in order to enable a faster response to the pen tip 110 being applied to a surface 102.

When the position sensing mechanism 120 is entered into pre-active mode, preparations are made for allowing the position sensing mechanism to start acquiring position data. The position sensing mechanism 120 may be maintained in a sleep mode when the electronic pen 100 is in the low power mode. This implies that the preparations may include waking the position sensing mechanism 120 by e.g. increasing a clock frequency of an internal clock of the position sensing mechanism 120. As an alternative, the position sensing mechanism 120 may be completely shut off in the low power mode of the electronic pen 100. Hence, bringing the position sensing mechanism 120 to the pre-active mode may include that the position sensing mechanism 120 is powered up to turn on the position sensing mechanism 120. Specifically, the preparations include ensuring that a detector of the position sensing mechanism 120 is powered, the detector being arranged to detect and record information that may be transformed into a position of the electronic pen 100. By means of the detector being powered, it is ready to detect and record information. For a position sensing mechanism 120 using an optical image sensor 124, this may imply that a bias voltage is applied to the pixels of the image sensor 124 so that the pixels are prepared for detecting and recording light impingent on them. Moreover, bringing the position sensing mechanism 120 to pre-active mode may include reading parameters, such as exposure time of the image sensor 124, from a memory in order to control the process of acquiring position data. Also, a capacitor for the light source may be charged in order to prepare the light source for emitting light. When a pen down detection occurs, the image sensor may immediately capture images of the surface 102 to which the electronic pen 100 is applied and the light source may emit light towards the portion of the surface 102 that is being imaged.

Also, when the touch grab event is detected, the processor 162 may be arranged to output a response in order to inform the user that the electronic pen 100 has detected that the pen is being grabbed. For instance, the processor 162 may trigger control circuitry to activate the display 140, step 810, which may cause the display 140 to be lit so that the user may see that the processor 162 has entered a normal run mode. The display 140 may show an ID of the pen user and a battery icon indicating a state of charge of the battery 170. Alternatively or additionally, the processor 162 may cause the vibrator to vibrate indicating to the user that the processor 162 has entered the normal run mode.

The processor 162 may be arranged to start a display timer when the display 140 is activated. After a preset period of time, the processor 162 may signal to the control circuitry to shut off the display 140 in order to save power, step 812, even if the user is still holding the pen 100. Alternatively, parts of the information on the display, such as user ID, may be removed to save power, while other information, such as the battery icon, remains lit but may be dimmed. Further, the processor 162 may maintain information of a last time a touch grab event occurred and check this time stamp when a new touch grab event is detected. If the time since last time a touch grab event occurred is shorter than a specified time limit, the processor 162 may decide not to activate the display 140. In this way, repetitive lighting of the display 140 during use of the electronic pen 100 may be avoided.

When a touch grab event has occurred, the processor 162 (or the separate processor unit) may be arranged to identify that a user releases the electronic pen 100 by the capacitance being continuously measured, step 814, and a possible change in the measured capacitance being detected, step 816. If a change is detected in the measured capacitance, a touch release event corresponding to a user releasing the electronic pen 100 may be triggered.

However, before issuing a touch release event, the processor 162 may control whether the pen 100 has been recently used, by checking if a pen down has been detected by the pen down detector 112 within a set previous period of time, step 818. If the pen 100 has recently been used, the detection of the touch release event may be erroneous. Further, if the electronic pen 100 is in a low power mode when the user starts writing with the electronic pen 100, it may take some time for the pen 100 to start acquiring position data, by e.g. capturing images of the surface 102 and some parts of a stroke may not be recorded. Therefore, it is desired that a touch release event is not issued closely after the detection of a pen down, since there is a risk that the touch release event was faulty and that a pen down may soon occur again. The processor 162 may thus maintain the electronic pen 100 in a normal run mode until a capacitance corresponding to a touch release is detected at a sufficient time after the last pen down was detected.

The touch release event may be output to the power management unit 200. The power management unit 200 may then start to put the electronic pen 100 in a low power mode, step 820. In the low power mode, the position sensing mechanism 120 may be turned off. For instance, the optical image sensor 124 of the position sensing mechanism 120 may be shut down and a process of controlling the light source may be stopped. Also, if active, the display 140 may be shut down.

The processor 162 may be arranged to detect the touch grab event by comparing a measured capacitance to a grab trig value. If the measured capacitance is higher than the grab trig value, the touch grab event may be issued. However, there are a number of alternative ways of detecting a change in the measured capacitance. For instance, a baseline average may be continuously updated maintaining an average value of measured capacitances. The baseline average may e.g. be based on a predefined number of last measured capacitances, or all measured capacitances since the last touch release event. The change in the measured capacitance may then be detected as a measured capacitance exceeding the baseline average by more than a trig offset value. This implies that the capacitance is not compared to an absolute capacitance value. Hence, if the environment around the electronic pen 100 slowly changes, due to e.g. changing humidity, temperature, or atmosphere pressure, the baseline average may be adapted and no erroneous touch grab event due to a changing environment would be issued. In a low power mode, the processor 162 may temporarily wake up at a predetermined frequency in order to continuously update the baseline average. This may only require that the processor 162 reads the present capacitance value and performs a quick calculation to update the baseline average. There is no need to wake up any other modules of the processor 162. Rather, the updating of the baseline average may be performed requiring insignificantly small power consumption.

As a further alternative, a change in the measured capacitance may be detected by comparing subsequent measurements of the capacitance and issuing a touch grab event when a following capacitance value exceeds a preceding capacitance value by more than a predefined amount. Of course, even further alternatives of detecting a change in the measured capacitance are feasible. For instance, a derivative or an integration of the measured capacitances may be calculated and used for detecting a change.

Also, a detection of a decrease in the measured capacitance may be used for, at least partly, waking up the electronic pen 100 from a low power mode. A decrease in the measured capacitance indicates that the conditions at the capacitive touch sensor 180 has changed, which may be due to a user grabbing the pen. For instance, the pen may be in an environment causing the measured capacitance to be rather high, e.g. by means of the pen 100 lying on a metal surface. In such case, a user lifting the pen from the metal surface may actually cause the measured capacitance to decrease. A detected decrease in the measured capacitance may be interpreted as a change occurring due to unknown reasons. Therefore, a wake-up procedure, including bringing the position sensing mechanism 120 into pre-active mode, may be started in order to ensure that the electronic pen 100 is prepared for detecting positions in case a user is about to use the pen. However, the electronic pen 100 may be set up not to output any response to the user, such as activating the display 140, when a decrease in the measured capacitance occurs. If the detected decrease in the measured capacitance truly is due to a user grabbing the pen and the user expects a response from the pen 100, the user would probably change grip of the pen 100 in order to check the functionality of the pen 100. This would allow a touch grab event to be detected as described above, whereby the wake-up procedure of the processor 162 may be started as described above.

As a yet further alternative, the power management unit 200 may require that several sequential detections of the measured capacitance correspond to the capacitive touch sensor 180 being grabbed in order to allow a touch grab event to be issued. In this regard, the power management unit 200 may trigger a wake-up procedure, including bringing the position sensing mechanism 120 into pre-active mode, already upon the first detected measurement of a capacitance corresponding to the capacitive touch sensor 180 being grabbed. However, by not allowing a touch grab event to be immediately issued, the display 140 may not be immediately activated. This implies that the display 140 may not be unnecessarily activated, if the capacitance change was due to some other reason than the user grabbing the electronic pen 100. Hence, power may be saved by not unnecessarily activating the display 140.

The processor 162 may be arranged to detect the touch release event by comparing a measured capacitance to a release trig value. If the measured capacitance is lower than the release trig value, the touch release event may be issued. However, as previously mentioned, the processor 162 may be arranged to first control whether the pen 100 has been recently used, by checking if a pen down has been detected by the pen down detector 112 within a set previous period of time. The processor 162 may be arranged to only issue a touch release event if a sufficient time has passed since the last pen down was detected. The checking of the time since last pen down detection may or may not be used with any of the alternative manners described below of detecting a change in the measured capacitance for identifying a release of the electronic pen 100 by a user.

In an alternative embodiment, a baseline average may be continuously updated maintaining an average value of measured capacitances. The baseline average may e.g. be based on a predefined number of last measured capacitances, or all measured capacitances since the last touch grab event. The processor 162 may check if a measured capacitance falls below the baseline average by more than a trig offset value. If so, the processor 162 may further check whether a variation of measured capacitances, e.g. a predefined number of last measured capacitances or all measured capacitances since the last touch grab event, is below a preset variation trig value. If the variation is above the trig value or the measured capacitance does not fall below the baseline average by more than a trig offset value, the baseline average is updated and the pen 100 is maintained in a normal run mode. The capacitance is continuously measured with a set frequency during normal run mode. However, if the measured capacitance does fall below the baseline average by more than a trig offset value and the variation of measured capacitances are below the preset variation trig value, the processor 162 may issue a touch release event and the pen 100 may enter into a low power mode (possibly in dependence of a sufficient time having passed since the last pen down detection). During use of an electronic pen 100, a user may frequently shift the grip of the pen 100, which may cause the measured capacitance to vary even though the user keeps holding the pen 100. This implies that individual measurements of a capacitance falling below the baseline average by more than a trig offset value may occasionally occur. If a low power mode is entered too soon, there is a risk of the processor 162 being in a low power mode when a user starts writing with pen 100. By controlling whether a variation of measured capacitances is below a trig value, it is ensured that the processor 162 does not enter a low power mode until the measured capacitance is consistently below the baseline average by more than a trig offset value. Also, by comparing the measured capacitance to a baseline average, the capacitance is not compared to an absolute capacitance value. Hence, if the environment around the electronic pen 100 slowly changes, due to e.g. changing humidity, temperature, or atmosphere pressure, the baseline average may be adapted and no erroneous touch release event due to a changing environment would be issued.

If a user holds the pen completely still for a period of time, the measured capacitance may be held constant for a period of time. This could cause the electronic pen to enter a low power mode by the baseline average being adapted to the constant level and the variation being low, as described above. However, in order to prevent the electronic pen 100 to enter a low power mode, the processor 162 may also be arranged to compare the measured capacitance to an absolute value. If the measured capacitance is higher than the absolute value, the electronic pen 100 is maintained in the normal run mode.

As a further alternative, a change in the measured capacitance may be detected by comparing subsequent measurements of the capacitance and issuing a touch release event when a following capacitance value falls below a preceding capacitance value by more than a predefined amount. As described above, even further alternatives of detecting a change in the measured capacitance are feasible. For instance, a derivative or an integration of the measured capacitances may be calculated used for detecting a change.

Thanks to the use of a capacitive touch sensor 180, the position sensing mechanism 120 may be brought to a pre-active mode before a user starts writing with the pen. This implies that the pen is ready to start detecting a position of the pen as soon as the pen tip 110 is applied to a surface. Hence, the pen will capture its position from the start of using the pen 100 on the surface 102 and no coordinates will be lost at the beginning of strokes. Further, thanks to the use of the capacitive touch sensor 180, the ability to capture all positions may be achieved without a need to maintain the position sensing mechanism 120 in a pre-active mode at all times. This implies that the electronic pen 100 is reliable while not requiring extensive power consumption.

Although the position sensing mechanism 120 is designed to already be in a pre-active mode when being applied to the surface, it may in certain situations occur that the pen 100 is in a low power mode when the pen tip 110 is applied to the surface 102. Typically, this may occur if a user grabs the pen 100 at a back portion of the pen 100, where the capacitive touch sensor 180 is not sensitive. Even if the pen is in a low power mode, the pen 100 will be able to detect a pen down. Hence, such a pen down may cause the power management unit 200 to initiate a wake-up procedure of the processor 162 and to turn on the position sensing mechanism 120. The position sensing mechanism 120 may then be triggered to start detecting positions of the pen as soon as possible. When a pen 100 enters normal run mode due to detection of a pen down, a few coordinates of the first strokes may be missed.

As described above, the pen 100 may be arranged not to enter a low power mode even if the capacitive touch sensor 180 detects that the pen is not held. This may be especially important when the processor 162 has entered into normal run mode based upon a pen down detection. It is an indication that the pen 100 is somehow used without the capacitive touch sensor 180 noticing that the pen is held by a user. Therefore, by preventing the processor 162 from entering a low power mode within a period of time since the last pen down was detected, another occasion of a wake-up procedure of the processor 162 being started by a pen down detection may be avoided.

The different power states of the electronic pen 100 will now be described in more detail. The electronic pen 100 may have a number of different power modes and may be arranged to switch between the power modes in order to save power, while maintaining the functionalities that are needed at each moment.

The electronic pen 100 may have a low power mode for saving power when the electronic pen 100 is not used. In the low power mode, peripheral components to the processor 162 may be powered down. In particular, the position sensing mechanism 120 may be powered down. Also, if the analyzing unit 130 is implemented in separate circuitry to the processor 162, this may be powered down. Other peripheral components, such as a display 140, a vibrator, and a communication unit 150 may also be powered down.

In the low power mode, the processor 162 of the electronic pen 100 may be set in a sleep state in order to use as little power as possible. In this regard, a main clock generator of the processor 162 may be disabled and only a low power timer may be maintained in order to keep the necessary functionalities of the processor 162 running. Further, a flash memory of the processor 162 may be disabled, since the processor 162 does not process any data in the low power mode and will therefore not need to use a quickly accessible memory. The processor 162 may use clock gating or power gating in order to shut down inactive parts of the processor 162. Also, ports of the processor 162 may be disabled.

A memory of the electronic pen 100 may be powered in the low power mode. In this memory, the electronic pen 100 may store the control program for running the electronic pen 100 and any parameter values of the control program.

Before the electronic pen 100 enters the low power mode, the processor 162 is configured to wake up on desired events. As described above, the electronic pen 100 may be configured to wake up based on a user touching the pen, as sensed by the capacitive touch sensor 180, and the pen tip 110 being applied to a surface 102, as sensed by the pen down detector 112. Hence, the power management unit 200 of the processor 162 may be configured to listen to interrupts from the capacitive touch sensor 180 and the pen down detector 112. The processor 162 may also be configured to wake up based on the electronic pen 100 being attached to a power source for charging the battery 170 of the pen 100, including when the electronic pen 100 is connected to an external unit 104 via e.g. a USB connector.

If any of these interrupts are detected by the power management unit 200 of the processor 162, the electronic pen 100 enters the normal run mode. First, the processor 162 starts the main clock generator and waits for a phased-lock loop to stabilize the frequency of the clock. Then, the control program is loaded from the memory so that full functionality of the processor 162 may be achieved. Also, if clock gating or power gating has been used, the entire processor 162 is now powered.

Further, the processor 162 may activate any peripheral components to the processor 162. For instance, the processor 162 may provide feedback to a user that the electronic pen 100 has entered the normal run mode via e.g. the vibrator or the display 140. Also, the communication unit 150 may be powered to enable communication of information between the electronic pen 100 and an external unit 104. The communication unit 150 may start to establish a connection to the external unit 104 so that the pen 100 may already be connected to the external unit 104, if there is a need to send information in real time to the external unit 104 based on position detection.

Also, when the electronic pen 100 enters the normal run mode, the position sensing mechanism 120 and the analyzing unit 130 are activated. This implies that the position sensing mechanism 120 is powered and entered into a pre-active mode ready to capture position data.

The electronic pen 100 may be arranged to capture position data only when the pen tip 110 is applied to the surface 102. Hence, if the pen down detector 112 does not detect the pen tip 110 being applied to the surface 102 or detects that the pen tip 110 has been lifted from the surface 102, the power management unit 200 may allow the electronic pen 100 to enter an idle mode.

However, according to an alternative, the electronic pen 100 may also be arranged to capture position data when hovering over the surface 102. For instance, the optical sensor 124 may obtain images of the position-coding pattern 108, when the pen tip 110 is held a small distance above the surface 102 so that the position may be detected even if the pen tip 110 is not applied to the surface 102. In such case, the power management unit 200 may allow the electronic pen 100 to enter an idle mode when a time longer than a set threshold has passed since the last time an image holding a decodable position was detected.

The electronic pen 100 may be in the idle mode, when the system is processing data but is not collecting new position data. For instance, the electronic pen 100 may be held, so that the capacitive touch sensor 180 detects a presence of a user's finger, but the pen 100 is not applied to a surface 102, so no position data is being captured. The position sensing mechanism 120 may still be powered and maintained in the pre-active mode in order to allow the position sensing mechanism 120 to quickly resume capturing of position data when the pen tip 110 is applied to the surface 102.

In order to save power in the idle mode, a clock frequency of the processor 162 may be reduced. Alternatively, the main clock generator may be powered down and a low power timer may provide a clock to the processor 162. The processor 162 may maintain the flash memory powered holding the control program of the processor 162 in order to enable the processor 162 to quickly resume full functionality when waking up from the idle mode.

Similar to the low power mode, the power management unit 200 of the processor 162 may be set to listen to interrupts that may cause the electronic pen 100 to resume the normal run mode. Again, these interrupts may be input from the capacitive touch sensor 180, the pen down detector 112 or an indication that the electronic pen 100 is attached to a power source for charging the battery 170 of the pen 100.

The electronic pen 100 may be arranged to go back to the low power mode, when the activity of the electronic pen 100 allows it. The power management unit 200 may be arranged to check several indications that may provide input whether the electronic pen 100 may enter the low power mode. These indications may include if the capacitive touch sensor 180 indicates that the electronic pen 100 is no longer grabbed, if no pen down has been detected by the pen down detector 112 for a time period exceeding a set threshold, and if no peripheral component to the processor 162 is processing data. If no checked indication prevents the electronic pen 100 from entering the low power mode, the electronic pen 100 may enter the low power mode.

The invention has mainly been described above with reference to a few embodiments. However, as is readily appreciated by a person skilled in the art, other embodiments than the ones disclosed above are equally possible within the scope and spirit of the invention, which is defined and limited only by the appended patent claims.

## Claims

1. An electronic pen, which comprises:
a position sensing mechanism (120) for acquiring position data indicative of a position of a pen tip (110) of the electronic pen in relation to a surface (102),
a capacitive touch sensor (180), which is arranged to detect when the electronic pen is grabbed by a user, and
a processor (162), which is arranged to receive a signal from the capacitive touch sensor (180) indicative of a user grabbing the electronic pen and, in response to receipt of the signal, to bring the position sensing mechanism (120) to a pre-active mode, wherein the position sensing mechanism (120) is ready to start acquiring position data.

2. The electronic pen of claim 1, wherein the processor (162), in response to receipt of the signal, is arranged to control whether the position sensing mechanism (120) is powered up and, if not, to trigger power up of the position sensing mechanism (120) in order to bring the position sensing mechanism (120) to said pre-active mode.

3. The electronic pen of claim 2, wherein the position sensing mechanism (120) comprises an image sensor (124) for capturing an image of the surface, and wherein the processor (162) is arranged to trigger pixel sensors of the image sensor (124) to be powered in order to bring the position sensing mechanism (120) to said pre-active mode.

4. The electronic pen of claim 3, wherein the position sensing mechanism (120) further comprises a light source for emitting light onto the surface (102), and wherein the processor (162) is arranged to trigger charging of a capacitor connected to the light source in order to prepare the light source when bringing the position sensing mechanism (120) to said pre-active mode.

5. The electronic pen of any one of the preceding claims, further comprising a pen down detector (112), which is arranged to detect when the pen tip (110) of the electronic pen is applied to a surface (102),
wherein the processor (162) is arranged to receive a signal from the pen down detector (112) indicative of the pen tip (110) being applied to a surface (102) and, in response to receipt of the signal, to trigger the position sensing mechanism (120) to start acquiring position data.

6. An electronic pen, which comprises:
a position sensing mechanism (120) for acquiring position data indicative of a position of a pen tip (110) of the electronic pen in relation to a surface (102),
a capacitive touch sensor (180), which is arranged to detect when the electronic pen is grabbed by a user,
a pen down detector (112), which is arranged to detect when a pen tip (110) of the electronic pen is applied to a surface (102), and
a power management unit (200) for controlling a power state of the electronic pen to switch between at least a low power mode and a normal run mode, wherein said power management unit (200) in said low power mode is configured to respond to interrupt signals from the capacitive touch sensor (180) and the pen down detector (112) for entering the normal run mode.

7. The electronic pen of claim 6, further comprising a processor (162), wherein the power management unit (200) is implemented in the processor (162) and the power management unit (200) controls power states of the processor (162).

8. The electronic pen of claim 7, wherein the power management unit (200) is arranged to set an internal clock frequency of the processor (162) in dependence of the power state.

9. The electronic pen of any one of claims 6-8, wherein the position sensing mechanism (120) is brought to a pre-active mode ready to start acquiring position data when the electronic pen is switched from the low power mode to the normal run mode.

10. An electronic pen, which comprises:
a position sensing mechanism (120) for acquiring position data indicative of a position of a pen tip (110) of the electronic pen in relation to a surface (102),
a casing (114), inside which said position sensing mechanism (120) is arranged, and
a capacitive touch sensor (180), the capacitive touch sensor (180) comprising a substrate (184) on which electrodes (182) are formed, the substrate (184) being mounted in the electronic pen such that the substrate (184) is arranged in a close relationship to the inside of the casing (114), the capacitive touch sensor (180) forming a touch area on the outside of the casing (114) that is sensitive to being touched by a human finger.

11. The electronic pen of claim 10, wherein the capacitive touch sensor (180) is arranged in a front portion of the pen close to the pen tip (110).

12. The electronic pen of claim 10 or 11, wherein the capacitive touch sensor (180) is arranged to extend along an entire circumference of the inside of the casing (114).

13. The electronic pen of any one of claims 10-12, wherein the capacitive touch sensor (180) is arranged between the casing (114) and the position sensing mechanism (120).

14. The electronic pen of any one of claims 10-13, further comprising a carrier (172) on which the position sensing mechanism (120) is mounted, the capacitive touch sensor (180) being mounted on the carrier (172), wherein the capacitive touch sensor (180) surrounds the carrier (172) and the position sensing mechanism (120).

15. The electronic pen of any one of claims 10-14, wherein the capacitive touch sensor (180) has a cylindrical shape and extends along a longitudinal direction of the electronic pen.

16. The electronic pen of any one of claims 10-15, wherein the substrate (184) is flexible to be foldable into a cylindrical shape.

17. An electronic pen, comprising:
a position sensing mechanism (120) for acquiring position data indicative of a position of a pen tip (110) of the electronic pen in relation to a surface (102),
a display (140) for communication of information to a pen user,
a capacitive touch sensor (180), which is arranged to detect when the electronic pen is grabbed by a user, and
a processor (162), which is arranged to receive a signal from the capacitive touch sensor (180) indicative of a user grabbing the electronic pen and, in response to said signal, trigger a control circuitry to activate the display (140).

18. The electronic pen according to claim 18, wherein the processor (162) is arranged to start a display timer when the display (140) is activated, and after a preset period of time the processor (162) signals the control circuitry to shut off the display (140).
